# EUROPÄISCHE PATENTSCHRIFT

(11) **EP 2 227 703 B1**
(45) Veröffentlichungstag und Bekanntmachung des Hinweises auf die Patenterteilung: **14.09.2016**
(21) Anmeldenummer: 08866664.9
(22) Anmeldetag: 22.12.2008
(51) Int. Cl.: G01S 13/87, G06K 9/32, G01S 13/75

(54) **VERFAHREN ZUR BEWEGUNGSERFASSUNG**
METHOD FOR DETECTING MOTION
PROCÉDÉ DE CAPTURE DE MOUVEMENTS

(30) Priorität: 21.12.2007 DE 102007062843
(43) Veröffentlichungstag der Anmeldung: 15.09.2010
(73) Patentinhaber: amedo smart tracking solutions GmbH, 44799 Bochum (DE)
(72) Erfinder: TRÖSKEN, Volker, 58456 Witten (DE); HASENAU, Laszlo, 44789 Bochum (DE)
(74) Vertreter: Isfort, Olaf
(86) Internationale Anmeldenummer: PCT/EP2008/011048
(87) Internationale Veröffentlichungsnummer: WO 2009/083226

(56) Entgegenhaltungen:
- DE-A1- 10 054 180
- GB-A- 2 312 801
- JP-A- 2001 265 521
- US-A1- 2005 207 617
- YOUNG KEE RYU ET AL: "RF Signal Synchronized Low Cost Motion Capture Device" MICROWAVE CONFERENCE, 2007. APMC 2007. ASIA-PACIFIC, IEEE, PISCATAWAY, NJ, USA, 11. Dezember 2007 (2007-12-11), Seiten 1-4, XP031279941 ISBN: 978-1-4244-0748-4

## Beschreibung

Die Erfindung betrifft ein Verfahren zur Bewegungserfassung, wobei eine oder mehrere Markierungen an einem Objekt an vorgegebenen Orten angebracht werden, deren räumliche Positionen erfasst und digitalisiert werden, wobei die Bewegung des Objektes anhand der zeitlich veränderlichen digitalen Positionsdaten registriert wird.

Unter Bewegungserfassung (englisch "Motion Capture") versteht man Verfahren, die es ermöglichen, Bewegungen von Objekten, beispielsweise auch Bewegungen von Menschen, aufzuzeichnen und die aufgezeichneten Daten zu digitalisieren, so dass die digitalen Bewegungsdaten z.B. mittels eines Computers analysiert und gespeichert werden können. Häufig werden die registrierten digitalen Bewegungsdaten benutzt, um diese auf Computergenerierte Modelle des jeweiligen Objektes zu übertragen. Derartige Techniken sind heutzutage bei der Produktion von Filmen und Computerspielen üblich. Die digital erfassten Bewegungsdaten werden beispielsweise verwendet, um dreidimensionale animierte Grafiken Computer-gestützt zu berechnen. Durch Bewegungserfassung können komplexe Bewegungsabläufe mittels Computer analysiert werden, um mit vergleichsweise geringem Aufwand animierte Computergrafiken zu erzeugen. Mittels Bewegungserfassung können die verschiedensten Arten von Bewegungen erfasst werden, nämlich Rotationen, Translationen sowie auch Verformungen der untersuchten Objekte. Auch die Erfassung von Bewegungen in sich beweglicher Objekte, die, wie z. B. beim Menschen, mehrere Gelenke haben, die unabhängig voneinander Bewegungen ausführen können, ist möglich. Unter dem Oberbegriff der Bewegungserfassung fällt auch die sogenannten "Performance Capture"-Technik. Bei dieser Technik werden nicht nur die Körperbewegungen, sondern auch die Gesichtsausdrücke, d.h. die Mimik von Personen erfasst und mittels Computer analysiert und weiterverarbeitet.
Bei bekannten Verfahren zur Bewegungserfassung werden an dem jeweiligen Objekt eine oder mehrere mehrere Markierungen angebracht, deren räumliche Positionen erfasst und digitalisiert werden. Ein solches Verfahren beschreibt z.B. die US 2005/207617 A1 und
US 2006/0192854 A1. Bei dem vorbekannten Verfahren werden lichtreflektierende Markierungen verwendet. Mehrere speziell ausgerüstete Kameras nehmen die Bewegungen des Objektes aus verschiedenen Richtungen auf. Mittels Software werden die Markierungen in den aufgenommen Videobilddaten identifiziert und aus den verschiedenen Positionen der Kameras werden dann die räumlichen Positionen der Markierungen bestimmt. Die Bewegung des Objektes wird schließlich anhand der zeitlichen Änderungen der digitalen Positionsdaten der Markierungen Computer-gestützt registriert.
Das vorbekannte Verfahren ist nachteiligerweise sehr aufwendig. Zur Bewegungserfassung ist die Aufnahme und Auswertung von Videodaten erforderlich, die mittels mehrerer Kameras aufgezeichnet werden. Nachteilig ist weiterhin, dass zwar das bekannte Verfahren ermöglicht, die Markierungen selbsttätig in den Videobilddaten zu identifizieren. Dabei ist es aber nicht ohne Weiteres möglich, die individuellen Markierungen zu identifizieren, d. h., dass nicht automatisch erkannt werden kann, welche Markierung an dem Objekt an welchem Ort jeweils angebracht ist. Diese Zuordnung muss gleichsam "von Hand" erfolgen, um die Positionsdaten der Markierungen den entsprechenden Anbringungsorten an dem Objekt zuzuordnen. Diese Zuordnung ist Voraussetzung für eine sinnvolle Analyse der registrierten Bewegungen, z. B. bei der Übertragung der Bewegungsdaten auf ein dreidimensionales Computergeneriertes Modell des Objektes.
Davon ausgehend ist es Aufgabe der Erfindung, ein verbessertes Verfahren zur Bewegungserfassung bereitzustellen. Insbesondere soll ein Verfahren geschaffen werden, das die Bewegungserfassung mit geringem Aufwand möglich macht.

Diese Aufgabe löst die Erfindung ausgehend von einem Verfahren der eingangs angegebenen Art dadurch, dass die Markierung bzw. die Markierungen jeweils einen Transponder umfassen, der durch elektromagnetische Strahlung aktiviert wird, und zwar in der Weise, dass der Transponder ein Lokalisierungssignal als elektromagnetische Strahlung aussendet, anhand dessen die Position der jeweiligen Markierung anhand der Amplitude und Phasenlage des Lokalisierungssignals erfasst wird.
Die Grundidee der Erfindung ist die Verwendung eines Transponders an sich bekannter Art als Markierung zur Positionsbestimmung und zur Bewegungserfassung.
Besonders gut eignet sich zur Bewegungserfassung als Markierung ein RFID-Tag. RFID ist bekanntlich eine Technik zur berührungslosen Identifizierung und Lokalisierung. Ein RFID-System besteht aus einem Transponder und einem Lesegerät zum Auslesen der Transponder-Kennung. Ein RFID-Transponder (auch als RFID-Tag bezeichnet) umfasst üblicherweise eine Antenne sowie einen integrierten elektronischen Schaltkreis mit einem analogen und einem digitalen Teil. Der analoge Teil (Tranceiver) dient zum Empfangen und Senden von elektromagnetischer Strahlung. Der digitale Schaltkreis weist einen Datenspeicher auf, in welchem Identifizierungsdaten des Transponders speicherbar sind. Bei komplexeren RFID-Transpondern hat der digitale Teil des Schaltkreises eine von Neumann-Architektur. Das von dem Lesegerät erzeugte hochfrequente elektromagnetische Feld wird über die Antenne des RFID-Transponders empfangen. In der Antenne entsteht, sobald sie sich in dem elektromagnetischen Feld des Lesegerätes befindet, ein Induktionsstrom, durch den der Transponder aktiviert wird. Der so aktivierte Transponder empfängt über das elektromagnetische Feld Befehle vom Lesegerät. Der Transponder erzeugt ein Antwortsignal, welches die vom Lesegerät abgefragten Daten enthält. Gemäß der Erfindung ist das Antwortsignal das Lokalisierungssignal, anhand dessen die räumliche Position der Markierung erfasst wird.
Gegenüber herkömmlichen Verfahren zur Bewegungserfassung hat das erfindungsgemäße Verfahren den Vorteil, dass die Aufnahme von Videobildern mit mehreren Kameras vollständig entfallen kann. Zur Bewegungserfassung ist keine Aufnahme und Verarbeitung von Videobilddaten erforderlich. Für die Durchführung des erfindungsgemäßen Verfahrens ist lediglich eine Empfangseinheit (Lesegerät) zum Empfangen des Lokalisierungssignals erforderlich.

Ein weiterer Vorteil ist, dass jede einzelne Markierung aus einer Mehrzahl von an dem Objekt angebrachten Markierungen individuell identifizierbar ist. Somit kann automatisch eine Zuordnung der erfassten räumlichen Position jeder Markierung zu dem zugehörigen Anbringungsort an dem Objekt getroffen werden. Dies erleichtert die automatische Verarbeitung der registrierten digitalen Positionsdaten gegenüber herkömmlichen Verfahren erheblich.

RFID-Tags eignen sich besonders gut als Markierungen gemäß der Erfindung, da diese eine sehr geringe Baugröße haben. Es sind miniaturisierte RFID-Transponder verfügbar, die nur staubkorngroß sind. Bekannt sind z.B. RFID-Transponder mit einer Größe von nur 0,05 x 0,05 mm. Derartige Transponder arbeiten bei sehr hohen Frequenzen im Bereich von einem Gigahertz und darüber. Solche miniaturisierten RFID-Transponder können problemlos an nahezu jedem beliebigen Objekt, dessen Bewegung erfasst werden soll, angebracht werden. Zur Erfassung der Bewegung von Personen ist es beispielsweise möglich, eine Vielzahl von Markierungen in Textilien zu integrieren, welche von der Person getragen werden. Denkbar ist es auch, zur Positions- und Bewegungserfassung RFID-Tags unter der Hautoberfläche unsichtbar anzubringen. Miniaturisierte RFID-Tags eignen sich ebenfalls sehr gut für die oben beschriebene Performance-Capture-Technik. Die Markierungen können im Bereich des Gesichts einer Person angebracht sein, um die Mimik der Person zu erfassen. Bei der Verwendung größerer RFID-Tags können diese mittels Klebe-, Adhäsions-, Saugnapfverbindungen oder dergleichen lösbar an dem Objekt anbringbar sein. Es ergeben sich die verschiedensten Anwendungsfelder der Erfindung, u.a. auch im Bereich der Medizintechnik. Im Bereich der interventionellen Radiologie kann das erfindungsgemäße Verfahren eingesetzt werden, um die Bewegung eines medizinischen Instrumentes (z.B. eines Katheters, einer Biopsienadel, eines Endoskops etc.) im Untersuchungsvolumen eines diagnostischen bildgebenden Gerätes zu verfolgen und ggf. zusammen mit diagnostischen Bilddaten zu visualisieren. Weiterhin können gemäß der Erfindung die Markierungen Gewebemarkierungen zur Markierung von Läsionen und erkranktem Gewebe im menschlichen Körper sein. Schließlich ist auch der industrielle Einsatz des erfindungsgemäßen Verfahrens, beispielweise im Bereich der Logistik oder im Bereich der Qualitätssicherung denkbar, um die Positionen besimmter Gegenstände (Güter, Maschinen, Werkzeuge etc.) zu erfassen und zu verfolgen oder um bestimmte Bewegungsabläufe von Maschinen oder Werkzeugen bei der Durchführung von Arbeiten zu kontrollieren.

Für die Erfindung werden zweckmäßigerweise passive Transponder als Markierungen verwendet. Die Stromversorgung der Schaltkreise der Transponder erfolgt durch den beim Empfang von elektromagnetischer Strahlung in der Antenne erzeugten Induktionsstrom. Von Vorteil ist die geringe Baugröße von passiven Transpondern, da diese ohne eigene aktive Energieversorgung, beispielsweise in Form einer Batterie, auskommen. Die Energie, die die Transponder zum Aussenden der Lokalisierungssignale benötigen, wird durch die elektromagnetische Strahlung, durch welche die Aktivierung der Transponder erfolgt, zur Verfügung gestellt.

Ein System zur Positions- und Bewegungserfassung gemäß der Erfindung umfasst eine Mehrzahl von an verschiedenen Positionen im Raum befindlichen Empfangseinheiten zum Empfang eines von einer Markierung eines Objektes ausgesandten Lokalisierungssignals, und eine mit den Empfangseinheiten verbundene Auswertungseinheit zur Bestimmung der Position der Markierung aus dem empfangenen Lokalisierungssignal. Die Markierung umfasst als Strahlungsquelle, die das Lokalisierungssignal als elektromagnetische Strahlung abstrahlt, einen Transponder oder auch einen anderweitigen Funksender. Die Empfangseinheiten sind im einfachsten Fall Antennen, die das Lokalisierungssignal von verschiedenen Positionen aus empfangen. Eine Sendeeinheit dient zum Aussenden von elektromagnetischer Strahlung zur Aktivierung der Transponder. Die Sendeeinheit, die Empfangseinheiten und die Auswertungseinheit bilden zusammen ein Lesegerät, wie es zum Auslesen von RFID-Tags im Prinzip üblich ist, wobei die Auswertungseinheit um Funktionen zur Bestimmung der Positionen der Markierungen erweitert ist. Aus der Feldstärke des Lokalisierungssignals am Ort der jeweiligen Empfangseinheit kann auf den Abstand der Transponder von der Empfangseinheit zurückgeschlossen werden. Wenn die Abstände der Transponder von den verschiedenen Empfangseinheiten, die sich an definierten Positionen im Raum befinden, bekannt sind, kann daraus mittels der Auswertungseinheit wiederum die genaue Position jedes einzelnen Transponders und damit der Markierung an dem Objekt berechnet werden.

Problematisch ist in einigen Fällen in der Praxis, dass die Feldstärke der Lokalisierungssignale Schwankungen unterworfen sein kann, beispielsweise aufgrund von Abschwächungen der Signale durch das Objekt selbst oder aufgrund von Signalreflektionen aus der Umgebung. Aus diesem Grund ist eine Positionsbestimmung anhand der Feldstärke, d. h. anhand der Amplitude der elektromagnetischen Strahlung der von den Transpondern der Markierungen abgestrahlten Lokalisierungssignale, unter Umständen nicht immer mit ausreichender Genauigkeit möglich. Zur Lösung dieses Problems kann vorgesehen sein, dass die Bestimmung der Positionen der Markierungen (zusätzlich oder ausschließlich) anhand der Phasenlage der elektromagnetischen Strahlung der Lokalisierungssignale an den Orten der Empfangseinheiten erfolgt. Die Phasenlage reagiert weniger empfindlich auf störende Umgebungseinflüsse als die Amplitude der elektromagnetischen Strahlung der Lokalisierungssignale. Denkbar ist es auch, dass zunächst eine grobe Positionsbestimmung anhand der Amplitude erfolgt, wobei die Genauigkeit durch Bestimmung der Phasenlage verfeinert wird. Die Positionsbestimmung anhand der Phasenlage erlaubt auch eine höhere Genauigkeit als die Positionsbestimmung anhand der Signalamplitude. Aufgrund der Periodizität der elektromagnetischen Strahlung ist die Positionsbestimmung anhand der Phasenlage unter Umständen nicht eindeutig. Entweder muss ein beschränktes Messvolumen eingehalten werden, innerhalb dessen aus der Phasenlage eindeutig auf die Position zurückgeschlossen werden kann, oder es müssen zusätzliche Maßnahmen ergriffen werden. Hier kann eine Kombination der Messung der Signalamplitude mit der Messung der Phasenlage Abhilfe schaffen. Alternativ oder ergänzend ist es möglich, die Nulldurchgänge des Lokalisierungssignals an den Orten der jeweiligen Empfangseinheiten während der Bewegung des Objektes zu zählen, um so eindeutig auf die korrekte Position zurückzuschließen.

Gemäß einer sinnvollen Weiterbildung der Erfindung kann vorgesehen sein, dass zur Erfassung der Position der Markierung bzw. der Markierungen die elektromagnetische Strahlung des von dem Transponder (oder Funksender) der jeweiligen Markierung abgestrahlten Lokalisierungssignals mittels wenigstens zweier an verschiedenen Orten befindlichen Empfangseinheiten empfangen wird, wobei die Position anhand der Differenz der Phasenlage des über die beiden Empfangseinheiten emfangenen Lokalisierungssignals bestimmt wird. Aus dem von den verschiedenen Positionen der Empfangseinheiten aus empfangenen Lokalisierungssignal kann die Phasendifferenz gebildet werden. Die Messung der Phasendifferenz gegenüber der absoluten Phasenlage ist von Vorteil, weil die von dem jeweiligen Transponder (oder Funksender) abgestrahlte elektromagnetische Strahlung des Lokalisierungssignals keine definierte absolute Phasenlage hat. Weiter verbessern lässt sich die erfindungsgemäße Phasen-basierte Positionsbestimmung dadurch, dass *n* ≥ 3 Empfangseinheiten vorgesehen sind, wobei *n* eine natürliche Zahl ist und wobei aus dem an n Orten empfangenen Lokalisierungssignal mittels einer entsprechenden Anzahl von Phasendetektoren bis zu *n·(n-1*)/2 Phasendifferenzwerte, die jeweils Paaren von Empfangseinheiten zugeordnet sind, gebildet und mittels der Auswertungseinheit verarbeitet werden. Durch eine größere Zahl von z.B. 5, 10 oder mehr im Raum verteilten Empfangseinheiten lässt sich durch die verschiedenen denkbaren Paarungen der Empfangseinheiten eine entsprechend große Zahl von Phasendifferenzwerten bilden. Beispielsweise bei 10 im Raum verteilten Antennen können 45 Paarungen gebildet und entsprechend bis zu 45 Phasendifferenzwerte aus dem empfangenen Lokalisierungssignal gebildet werden. Diese Vielzahl von Messwerten, die der Auswertungseinheit zur Verfügung stehen, ergibt eine hohe Redundanz und damit Zuverlässigkeit und Genauigkeit bei der Positionsbestimmung. Vorteilhafterweise können zur Messung der Phasendifferenzen handelsübliche und preiswerte Phasendetektoren, wie sie z.B. in PLL-Bausteinen zum Einsatz kommen, verwendet werden. Häufig sind in solche PLL-Bausteine bereits Signalverstärker zur Verstärkung der empfangenen Signale integriert.

Zweckmäßigerweise wird bei der Positionsbestimmung anhand der Phasendifferenzen so vorgegangen, dass die aus dem empfangenen Lokalisierungssignal generierten Phasendifferenzwerte mit (z.B. in der Auswertungseinheit gespeicherten) Referenz-Phasendifferenzwerten verglichen werden. Es kann ein einfacher Vergleich, ggf. in Kombination mit einer Interpolation, mit den gespeicherten Referenz-Phasendifferenzwerten erfolgen, die entsprechend x-, y- und z-Koordinaten zur Positionsbestimmung zugeordnet sind. Alternativ kann die Positionsbestimmung mittels eines neuronalen Netzwerkes erfolgen, welchem die aus dem empfangenen Lokalisierungssignal generierten Phasendifferenzwerte als Eingangswerte zugeführt werden. Am Ausgang des neuronalen Netzes liegen dann die Raumkoordinaten an, aus denen sich die momentane Position der jeweiligen Markierung ergibt. Zweckmäßig wird vorab eine Kalibrierungsmessung durchgeführt, in der für eine Mehrzahl vorgegebener Positionen Referenz-Phasendifferenzwerte erfasst werden. Diese können einfach zusammen mit den Raumkoordinaten der vorgegebenen Positionen in einer entsprechenden Datenmatrix gespeichert werden. Ebenso kann auf der Basis der Kalibrierungsmessung das erwähnte neuronale Netzwerk trainiert werden. Sinnvoll ist es weiterhin, unabhängig von der Kalibrierung regelmäßig mit dem Objekt bzw. der Markierung einen vorgegebenen Referenzpunkt aufzusuchen. Dies kann genutzt werden, um in regelmäßigen Abständen einen Abgleich bezüglich des Koordinatenursprungs durchzuführen. Bei der Positionsbestimmung kann eine Verschiebung des Koordinatenursprungs durch eine einfache Vektoraddition ggf. sehr einfach kompensiert werden, ohne dass eine erneute vollständige Rekalibrierung nötig ist.

Zur Erzielung einer möglichst hohen Genauigkeit bei der Bestimmung der räumlichen Positionen der Markierungen kann es sinnvoll sein, die Transponder und die zugehörigen Empfangseinheiten so auszugestalten, dass diese bei zwei oder mehr verschiedenen Frequenzen arbeiten. Dadurch lässt sich ein abgestuftes Verfahren bei der Positionsbestimmung zur sukzessiven Erhöhung der Genauigkeit realisieren. Durch die Erzeugung der Lokalisierungssignale bei niedrigen Frequenzen und entsprechend großen Wellenlängen kann zunächst eine grobe aber eindeutige Bestimmung der Position erfolgen. Zur Steigerung der Genauigkeit wird dann zu einer höheren Frequenz übergegangen, oder es wird die Frequenz der Lokalisierungssignale sukzessive weiter gesteigert. Bei höheren Frequenzen sind die Anforderungen an die Auflösung bei der Bestimmung der Phasenlage zur Erzielung einer bestimmten räumlichen Auflösung geringer. Bei der sukzessiven Steigerung der Frequenz kann die Zahl der Nulldurchgänge zur Bestimmung des genauen Abstandes zwischen Transponder und Empfangseinheit ermittelt werden. Zur möglichst genauen Positionsbestimmung ist eine Frequenzänderung in beide Richtungen, d. h. von niedrigen zu hohen oder auch von hohen zu niedrigen Frequenzen, denkbar. In Abhängigkeit von den Frenquenzbereichen, die zur Positionsbestimmung abgedeckt werden müssen, kann es erforderlich sein, zwei oder mehr Antennen vorzusehen, mit denen die Schaltkreise der Transponder verbunden sind, wobei jede der Antenne jeweils einem bestimmten Frequenzbereich zugeordnet ist. Ebenso denkbar ist es, Markierungen zu verwenden, die jeweils mehrere separate Transponder umfassen, die bei verschiedenen Frequenzen arbeiten.

Gemäß der Erfindung werden zur Bewegungserfassung ggf. mehrere Markierungen an dem Objekt angebracht. Die Transponder der Markierungen können entweder parallel (sogenannte Pulk-Erfassung) oder zeitlich nacheinander zum Aussenden von Lokalisierungssignalen angeregt werden, um die räumlichen Positionen der Markierungen zu bestimmen.

Ausführungsbeispiele der Erfindung werden im Folgenden anhand der beigefügten Zeichnungen näher erläutert. Es zeigen:
- Figur 1: System zur Bewegungserfassung gemäß der Erfindung;
- Figur 2: erfindungsgemäßes System zur Positions- und/oder Bewegungserfassung anhand von Phasendifferenzen.

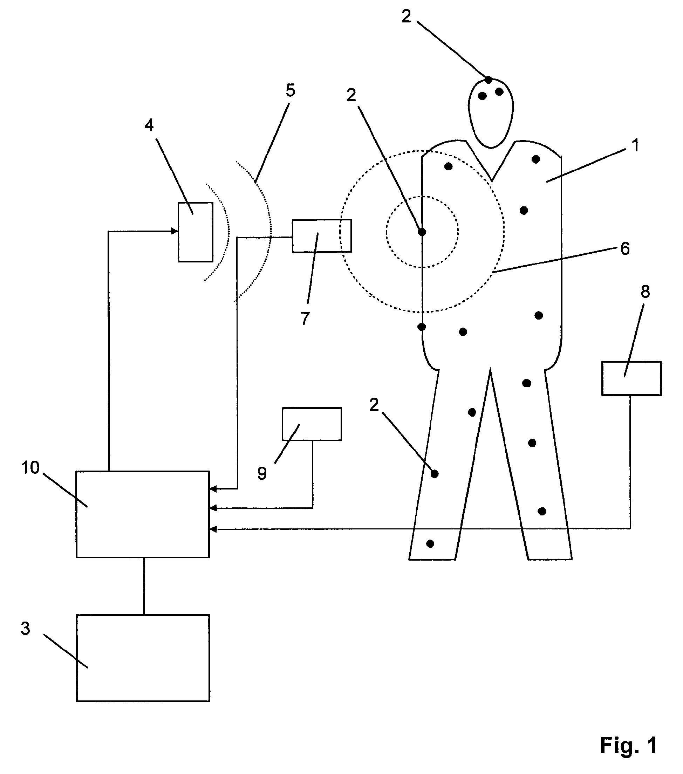

Das in der Figur 1 dargestellte System dient zur Bewegungserfassung. Dabei geht es darum, die Bewegungen einer Person 1 aufzuzeichnen und zu digitalisieren. An der Person 1 sind eine Mehrzahl von Markierungen 2 über den ganzen Körper verteilt angeordnet. Zur Bewegungserfassung werden die räumlichen Positionen der Markierungen 2 aufgezeichnet und digitalisiert. Die Bewegung der Person 1 wird anhand der zeitlich veränderlichen digitalen Positionsdaten mittels eines Computers 3 registriert. Der Computer 3 kann die digitalen Positionsdaten der Markierungen analysieren, beispielsweise um die Bewegungsabläufe auf ein dreidimensionales Modell zu übertragen. Diese Modellierung kann bei der Erzeugung von animierten Computergrafiken verwendet werden. Bei dem in der Zeichnung dargestellten System ist eine Sendeeinheit 4 vorgesehen, die elektromagnetische Strahlung 5 aussendet. Gemäß der Erfindung umfassen die Markierungen 2 jeweils einen Transponder (in der Zeichnung nicht näher dargestellt). Die Strahlung 5 wird von den Transpondern der Markierungen 2 empfangen. Die Transponder werden durch die empfangene Strahlung 5 angeregt, so dass diese ihrerseits Lokalisierungssignale als hochfrequente elektromagnetische Strahlung 6 aussenden. Die von den Transpondern der Markierungen 2 abgestrahlten Lokalisierungssignale werden von drei an definierten Positionen im Raum befindlichen Empfangseinheiten 7, 8 und 9 empfangen. Die Empfangseinheiten 7, 8 und 9 sind mit einer Auswertungseinheit 10 verbunden, welche anhand der Amplitude und anhand der Phasenlage der elektromagnetischen Strahlung 6 der Lokalisierungssignale am jeweiligen Ort der Empfangseinheiten 7, 8 und 9 die Positionen der Markierungen 2 bestimmt. Die Positionsdaten werden schließlich in digitaler Form dem Computer 3 zur Verfügung gestellt.

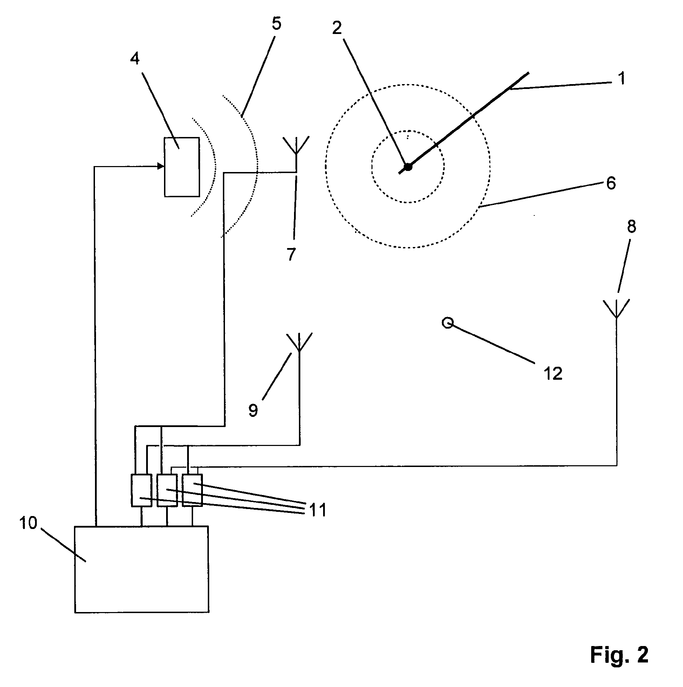

Bei dem in Figur 2 dargestellten Ausführungsbeispiel ist das Objekt 1 ein medizinisches Instrument, z.B. ein Katheter, an dessen Ende eine Markierung 2 mit Transponder angebracht ist. Die im Raum verteilten drei Empfangseinheiten 7, 8 und 9 sind einfache Antennen. Diese sind in den drei möglichen Paarungen mit drei Phasendetektoren 11 verbunden. Die am Ausgang der Phasendetektoren 11 anliegenden Signale, die durch die Phasendifferenzen des an den Orten der Antennen 7, 8 und 9 empfangenen Lokalisierungssignals 6 bestimmt sind, werden der Auswertungseinheit 10 zur Bestimmung der Position der Markierung 2 zugeführt. Gemäß der Erfindung erfolgt die Bestimmung der Position anhand der Differenzen der Phasenlage des über jeweils zwei Empfangseinheiten 7, 8, 9 emfangenen Lokalisierungssignals. Aus dem von den verschiedenen Positionen der Antennen 7, 8, und 9 aus empfangenen Lokalisierungssignal 6 werden die Phasendifferenzen mittels der Phasendetektoren 11 gebildet. Mit n Antennen können bis zu *n·(n-*1)/2 Phasendifferenzwerte gebildet werden, die jeweils Antennenpaaren zugeordnet sind. Die Auswertungseinheit 10 führt die Positionsbestimmung anhand der Phasendifferenzen so durch, dass die aus dem empfangenen Lokalisierungssignal 6 generierten Phasendifferenzwerte mit gespeicherten Referenz-Phasendifferenzwerten verglichen werden. Daraus ergeben sich dann die x-, y- und z-Koordinaten der Markierung 2. Alternativ kann die Positionsbestimmung mittels eines neuronalen Netzwerkes erfolgen, welches die Auswertungseinheit 10 berechnet. Vor der eigentlichen Positionsbestimmung bzw. Bewegungserfassung wird eine Kalibrierungsmessung durchgeführt, in der für eine Mehrzahl vorgegebener Positionen der Markierung 2 die Referenz-Phasendifferenzwerte erfasst werden. Diese werden zusammen mit den Raumkoordinaten der vorgegebenen Positionen in der Auswertungseinheit 10 gespeichert. Ebenso kann auf der Basis der Kalibrierungsmessung das erwähnte neuronale Netzwerk trainiert werden. Sinnvoll ist es weiterhin, regelmäßig mit dem Objekt 1 bzw. der Markierung 2 einen im Raum fest vorgegebenen Referenzpunkt 12 aufzusuchen. Hierdurch kann in regelmäßigen Abständen ein Abgleich bezüglich des Koordinatenursprungs durchgeführt werden.

## Patentansprüche

1. Verfahren zur Bewegungserfassung, wobei wenigstens eine Markierung (2) an einem Objekt (1) angebracht wird, deren räumliche Position erfasst und digitalisiert wird, wobei die Bewegung des Objektes (1) anhand der zeitlich veränderlichen digitalen Positionsdaten registriert wird, wobei die wenigstens eine Markierung (2) einen Transponder umfasst, der durch elektromagnetische Strahlung (5) aktiviert wird, und zwar in der Weise, dass der Transponder ein Lokalisierungssignal als elektromagnetische Strahlung (6) aussendet, anhand dessen die Position der Markierung (2) erfasst wird, **dadurch gekennzeichnet, dass** die Erfassung der Position der wenigstens einen Markierung (2) anhand der Amplitude und Phasenlage der elektromagnetischen Strahlung (6) des von dem Transponder der Markierung (2) abgestrahlten Lokalisierungssignals am Ort einer Empfangseinheit (7, 8, 9), über welche das Lokalisierungssignal empfangen wird, erfolgt, wobei zunächst eine grobe Positionsbestimmung anhand der Amplitude erfolgt und wobei die Genauigkeit der Positionsbestimmung durch Bestimmung der Phasenlage verfeinert wird.

2. Verfahren nach Anspruch 1, **dadurch gekennzeichnet, dass** der Transponder ein RFID-Tag ist.

3. Verfahren nach Anspruch 2, **dadurch gekennzeichnet, dass** in einem elektronischen Datenspeicher des RFID-Tags Daten bezüglich des Anbringungsortes an dem Objekt (1) gespeichert sind.

4. Verfahren nach einem der Ansprüche 1 bis 3, **dadurch gekennzeichnet, dass** zur Erfassung der Position der wenigstens einen Markierung (2) die elektromagnetische Strahlung (6) des von dem Transponder der Markierung (2) abgestrahlten Lokalisierungssignals mittels wenigstens zweier an verschiedenen Orten befindlichen Empfangseinheiten (7, 8, 9) empfangen wird, wobei die Position anhand der Differenz der Phasenlage des über die beiden Empfangseinheiten (7, 8, 9) emfangenen Lokalisierungssignals bestimmt wird.

5. Verfahren nach Anspruch 4, **dadurch gekennzeichnet, dass** das Lokalisierungssignal über *n* ≥ 3 an verschiedenen Orten befindliche Empfangseinheiten (7, 8, 9) empfangen wird, wobei n eine natürliche Zahl ist und wobei aus dem an n Orten empfangenen Lokalisierungssignal bis zu *n·(*n-1*)*/2 Phasendifferenzwerte, die jeweils Paaren von Empfangseinheiten (7, 8, 9) zugeordnet sind, erzeugt werden, und wobei anhand der Phasendifferenzwerte die Position der wenigstens einen Markierung (2) bestimmt wird.

6. Verfahren nach Anspruch 4 oder 5, **dadurch gekennzeichnet, dass** die Positionsbestimmung dadurch erfolgt, dass die aus dem empfangenen Lokalisierungssignal generierten Phasendifferenzwerte mit Referenz-Phasendifferenzwerten verglichen werden.

7. Verfahren nach einem der Ansprüche 1 bis 6, **dadurch gekennzeichnet, dass** das Objekt (1) ein medizinisches Instrument ist.

8. Verwendung eines Transponders, der durch elektromagnetische Strahlung (5) aktivierbar ist, und zwar in der Weise, dass er ein Lokalisierungssignal als elektromagnetische Strahlung (6) aussendet, anhand dessen die Position des Transponders erfassbar ist, als an einem Objekt (1) angebrachte Markierung (2) zur Erfassung der Position und/oder von Bewegungen des Objektes (1), **dadurch gekennzeichnet, dass** die Erfassung der Position der Markierung (2) anhand der Amplitude und Phasenlage der elektromagnetischen Strahlung des von dem Transponder abgestrahlten Lokalisierungssignals (6) am Ort einer Empfangseinheit (7, 8, 9), über welche das Lokalisierungssignal (6) empfangen wird, erfolgt, wobei zunächst eine grobe Positionsbestimmung anhand der Amplitude erfolgt und wobei die Genauigkeit der Positionsbestimmung durch Bestimmung der Phasenlage verfeinert wird.

9. Verwendung nach Anspruch 8, **dadurch gekennzeichnet, dass** zur Erfassung der Position der Markierung (2) die elektromagnetische Strahlung (6) des von dem Transponder abgestrahlten Lokalisierungssignals mittels wenigstens zweier an verschiedenen Orten befindlicher Empfangseinheiten (7, 8, 9) empfangen wird, wobei die Position anhand der Differenz der Phasenlage des über die wenigstens zwei Empfangseinheiten (7, 8, 9) emfangenen Lokalisierungssignals bestimmt wird.

10. System zur Positions- und/oder Bewegungserfassung, mit einem Objekt (1), an dem wenigstens eine Markierung (2) angebracht ist, einer Mehrzahl von an verschiedenen Positionen befindlichen Empfangseinheiten (7, 8, 9) zum Empfang eines von der Markierung (2) ausgesandten Lokalisierungssignals, und einer mit den Empfangseinheiten (7, 8, 9) verbundenen Auswertungseinheit (10) zur Bestimmung der Position der Markierung (2) aus dem empfangenen Lokalisierungssignal, **dadurch gekennzeichnet, dass** die wenigstens eine Markierung (2) eine Strahlungsquelle umfasst, die das Lokalisierungssignal als elektromagnetische Strahlung (6) aussendet, und dass die Position der Markierung (2) mittels der Auswertungseinheit (10) anhand der Amplitude und Phasenlage der elektromagnetischen Strahlung (6) an dem Ort wenigstens einer der Empfangseinheiten (7, 8, 9) bestimmt wird, wobei zunächst eine grobe Positionsbestimmung anhand der Amplitude erfolgt und wobei die Genauigkeit der Positionsbestimmung durch Bestimmung der Phasenlage verfeinert wird.

11. System nach Anspruch 10, **dadurch gekennzeichnet, dass** mittels der Auswertungseinheit (10) die Position anhand der Differenz der Phasenlage des über jeweils zwei Empfangseinheiten (7, 8, 9) empfangenen Lokalisierungssignals bestimmt wird, wozu die Empfangseinheiten (7, 8, 9) über Phasendetektoren (11) mit der Auswertungseinheit (10) verbunden sind.

12. System nach Anspruch 11, **dadurch gekennzeichnet, dass** *n* ≥ 3 Empfangseinheiten (7, 8, 9) vorgesehen sind, wobei n eine natürliche Zahl ist und wobei aus dem an n Orten empfangenen Lokalisierungssignal mittels der Phasendetektoren (11) bis zu *n·(n*-1*)*/2 Phasendifferenzwerte, die jeweils Paaren von Empfangseinheiten (7, 8, 9) zugeordnet sind, gebildet und mittels der Auswertungseinheit (10) verarbeitet werden.

## Claims

1. Method for detecting motion, wherein at least one marking (2) is attached to an object (1), the spatial position of which is detected and digitized, wherein the movement of the object (1) is registered on the basis of the time-varying digital position data, wherein the at least one marking (2) comprises a transponder which is activated by electromagnetic radiation (5), to be precise in such a way that the transponder emits a localization signal as electromagnetic radiation (6), on the basis of which the position of the marking (2) is detected, **characterized**
**in that** the position of the at least one marking (2) is detected on the basis of the amplitude and phase of the electromagnetic radiation (6) of the localization signal, emitted by the transponder of the marking (2), at the location of a reception unit (7, 8, 9), by means of which the localization signal is received, wherein, initially, there is a rough position determination on the basis of the amplitude and wherein the accuracy of the position determination is refined by determining the phase.

2. Method according to Claim 1, **characterized in that** the transponder is an RFID tag.

3. Method according to Claim 2, **characterized in that** data in respect of the attachment location at the object (1) are stored in an electronic data memory of the RFID tag.

4. Method according to one of Claims 1 to 3, **characterized in that**, for the purposes of detecting the position of the at least one marking (2), the electromagnetic radiation (6) of the localization signal emitted by the transponder of the marking (2) is received by means of at least two reception units (7, 8, 9) situated at different locations, wherein the position is determined on the basis of the difference in the phase of the localization signal received by way of the two reception units (7, 8, 9).

5. Method according to Claim 4, **characterized in that** the localization signal is received by way of *n* ≥ 3 reception units (7, 8, 9) situated at different locations, where *n* is a natural number and wherein up to *n·(n-*1*)*/2 phase difference values, which are each assigned to pairs of reception units (7, 8, 9), are generated from the localization signal received at the *n* locations and wherein the position of the at least one marking (2) is determined on the basis of the phase difference values.

6. Method according to Claim 4 or 5, **characterized in that** the position is determined by virtue of the phase difference values generated from the received localization signal being compared to reference phase difference values.

7. Method according to one of Claims 1 to 6, **characterized in that** the object (1) is a medical instrument.

8. Use of a transponder which is activatable by electromagnetic radiation (5), to be precise in such a way that it emits a localization signal as electromagnetic radiation (6) on the basis of which the position of the transponder is detectable, as a marking (2) attached to an object (1) for detecting the position and/or movements of the object (1), **characterized in that** the position of the marking (2) is detected on the basis of the amplitude and the phase of the electromagnetic radiation of the localization signal (6), emitted by the transponder, at the location of a reception unit (7, 8, 9), by means of which the localization signal (6) is received, wherein, initially, there is a rough position determination on the basis of the amplitude and wherein the accuracy of the position determination is refined by determining the phase.

9. Use according to Claim 8, **characterized in that**, for the purposes of detecting the position of the marking (2), the electromagnetic radiation (6) of the localization signal emitted by the transponder is received by means of at least two reception units (7, 8, 9) situated at different locations, wherein the position is determined on the basis of the difference in the phase of the localization signal received by way of the at least two reception units (7, 8, 9).

10. System for detecting a position and/or motion, comprising an object (1) at which at least one marking (2) has been attached, a plurality of reception units (7, 8, 9), situated at various positions, for receiving a localization signal emitted by the marking (2), and an evaluation unit (10), connected to the reception units (7, 8, 9), for determining the position of the marking (2) from the received localization signal,
**characterized**
**in that** the at least one marking (2) comprises a radiation source which emits the localization signal as electromagnetic radiation (6) and in that the position of the marking (2) is determined by means of the evaluation unit (10) on the basis of the amplitude and phase of the electromagnetic radiation (6) at the location of at least one of the reception units (7, 8, 9), wherein, initially, there is a rough position determination on the basis of the amplitude and wherein the accuracy of the position determination is refined by determining the phase.

11. System according to Claim 10, **characterized in that** the position is determined by means of the evaluation unit (10) on the basis of the difference in the phase of the localization signal received by in each case two reception units (7, 8, 9), for the purposes of which the reception units (7, 8, 9) are connected by way of phase detectors (11) to the evaluation unit (10).

12. System according to Claim 11, **characterized in that** *n* ≥ 3 reception units (7, 8, 9) are provided, where n is a natural number and wherein up to *n·(n-*1)/2 phase difference values, which are each assigned to pairs of reception units (7, 8, 9), are formed by means of the phase detectors (11) from the localization signal received at the n locations and processed by means of the evaluation unit (10).

## Revendications

1. Procédé destiné à détecter des mouvements, lors duquel on appose au moins un marquage (2) sur un objet (1) dont on détecte et on numérise la position dans l'espace, lors duquel le mouvement de l'objet (1) est enregistré à l'aide des données de position numériques variables dans le temps, l'au moins un marquage (2) comprenant un transpondeur, qui est activé par rayonnement électromagnétique (5), à savoir de sorte que le transpondeur émette un signal de localisation en tant que rayonnement électromagnétique (6), à l'aide duquel la position du marquage (2) est détectée,
**caractérisé en ce que**
la détection de la position de l'au moins un marquage (2) s'effectue à l'aide de l'amplitude et de la position de phase du rayonnement électromagnétique (6) du signal de localisation émis par le transpondeur du marquage (2) à l'endroit d'une unité réceptrice (7, 8, 9) par l'intermédiaire de laquelle le signal de localisation est réceptionné, une détermination grossière de la position s'effectuant d'abord à l'aide de l'amplitude et la précision de la détermination de la position étant affinée par la détermination de la position de phase.

2. Procédé selon la revendication 1, **caractérisé en ce que** le transpondeur est une balise RFID.

3. Procédé selon la revendication 2, **caractérisé en ce que** dans une mémoire de données électronique de la balise RFID sont enregistrées des données concernant le lieu d'apposition sur l'objet (1).

4. Procédé selon l'une quelconque des revendications 1 à 3, **caractérisé en ce que** pour la détection de la position de l'au moins un marquage (2), le rayonnement électromagnétique (6) du signal de localisation émis par le transpondeur du marquage (2) est réceptionné au moyen d'au moins deux unités réceptrices (7, 8, 9) se trouvant en différents endroits, la position étant déterminée à l' aide de la différence de la position de phase du signal de localisation réceptionné par l'intermédiaire des deux unités réceptrices (7, 8, 9).

5. Procédé selon la revendication 4, **caractérisé en ce que** le signal de localisation est réceptionné par l'intermédiaire de n ≥ 3 unités réceptrices (7, 8, 9) se trouvant en différents endroits, n étant un entier naturel et à partir du signal de localisation réceptionné en n endroits, jusqu'à *n·(n*-1)/2 valeurs de déphasage, qui sont respectivement associées à des paires d'unités réceptrices (7, 8, 9) étant générées et à l'aide des valeurs de déphasage, la position de l'au moins un marquage (2) étant déterminée.

6. Procédé selon la revendication 4 ou la revendication 5, **caractérisé en ce que** la détermination de la position s'effectue **en ce qu'**on compare les valeurs de déphasage générées à partir du signal de localisation réceptionné avec des valeurs de déphasage de référence.

7. Procédé selon l'une quelconque des revendications 1 à 6, **caractérisé en ce que** l'objet (1) est un instrument médical.

8. Utilisation d'un transpondeur qui est activable par rayonnement électromagnétique (5), à savoir de telle manière qu'il émet un signal de localisation en tant que rayonnement électromagnétique (6) à l'aide duquel la position du transpondeur est susceptible d'être détectée, en tant qu'un marquage (2) apposé sur un objet (1) pour la détection de la position et/ou de mouvements de l'objet (1), **caractérisée en ce que** la détection de la position du marquage (2) s'effectue à l'aide de l'amplitude et de la position de phase du rayonnement électromagnétique du signal de localisation (6) émis par le transpondeur à l'endroit de l'unité réceptrice (7, 8, 9), par l'intermédiaire de laquelle le signal de localisation (6) est réceptionné, d'abord une détermination grossière de la position étant effectuée à l'aide de l'amplitude et la précision de la détermination de la position étant affinée par détermination de la position de phase.

9. Utilisation selon la revendication 8, **caractérisée en ce que** pour la détection de la position du marquage (2), le rayonnement électromagnétique (6) du signal de localisation émis par le transpondeur est réceptionné au moyen d'au moins deux unités réceptrices (7, 8, 9) se trouvant en différents endroits, la position étant déterminée à l'aide de la différence de la position de phase du signal de localisation réceptionné par l'intermédiaire des au moins deux unités réceptrices (7, 8, 9).

10. Système destiné à la détection de position et/ou de mouvement, avec un objet (1) sur lequel est apposé au moins un marquage (2), une pluralité d'unités réceptrices (7, 8, 9) se trouvant en différentes positions pour la réception d'un signal de localisation envoyé par le marquage (2) et une unité d'évaluation (10) reliée avec les unités réceptrices (7, 8, 9) pour la détermination de la position du marquage (2) à partir du signal de localisation réceptionné.
**caractérisé en ce que**
l'au moins un marquage (2) comprend une source d'émission qui émet le signal de localisation en tant que rayonnement électromagnétique (6) et **en ce que** la position du marquage (2) est déterminée au moyen de l'unité d'évaluation (10), à l'aide de l'amplitude et de la position de phase du rayonnement électromagnétique (6) à l'endroit d'au moins l'une des unités émettrices (7, 8, 9), une détermination grossière de la position s'effectuant d'abord à l'aide de l'amplitude et la précision de la détermination de la position étant affinée par détermination de la position de phase.

11. Système selon la revendication 10, **caractérisé en ce qu'**au moyen de l'unité d'évaluation (10), la position est déterminée à l'aide de la différence de la position de phase du signal de localisation réceptionné par l'intermédiaire de chaque fois deux unités réceptrices (7, 8, 9), à cette fin, les unités réceptrices (7, 8, 9) étant reliées avec l'unité d'évaluation (10), par l'intermédiaire de détecteurs de phase (11).

12. Système selon la revendication 11, **caractérisé en ce que** *n* ≥ 3 unités réceptrices (7, 8, 9) sont prévues, n étant un entier naturel et à partir du signal de localisation réceptionné en n endroits, au moyen des détecteurs de phase (11) jusqu'à *n·*(*n-*1)/2 valeurs de déphasage, qui sont respectivement associées à des paires d'unités réceptrices (7, 8, 9) étant formées et traitées au moyen de l'unité d'évaluation (10).
